# EUROPÄISCHE PATENTSCHRIFT

(11) **EP 3 074 261 B1**
(45) Veröffentlichungstag und Bekanntmachung des Hinweises auf die Patenterteilung: **10.01.2018**
(21) Anmeldenummer: 14803043.0
(22) Anmeldetag: 11.11.2014
(51) Int. Cl.: B60K 23/04, B60W 10/16, B60W 10/02, B60W 30/18, F16H 48/36

(54) **AKTIVES DIFFERENTIAL UND KRAFTFAHRZEUG**
ACTIVE DIFFERENTIAL AND MOTOR VEHICLE
DIFFÉRENTIEL ACTIF ET VÉHICULE AUTOMOBILE

(30) Priorität: 28.11.2013 DE 102013019906
(43) Veröffentlichungstag der Anmeldung: 05.10.2016
(73) Patentinhaber: Audi AG, 85045 Ingolstadt (DE)
(72) Erfinder: PINSCHMIDT, Udo, 85080 Gaimersheim (DE); SCHELS, Thomas, 85110 Kipfenberg-Schelldorf (DE)
(86) Internationale Anmeldenummer: PCT/EP2014/003021
(87) Internationale Veröffentlichungsnummer: WO 2015/078560

(56) Entgegenhaltungen:
- DE-A1-102010 049 550
- DE-B4- 19 680 744
- US-A1- 2004 220 011
- US-A1- 2012 083 378

## Beschreibung

Die Erfindung betrifft ein aktives Differential zur gesteuerten Verteilung eines durch einen Antriebsmotor erzeugten Antriebsmoments auf zwei Abtriebswellen, umfassend ein Planetengetriebe zur Kopplung der Abtriebswellen mit einer Antriebswelle des Antriebsmotors und einer Verteilwelle eines Verteilmotors, wobei die Verteilung des Antriebsmoments auf die Abtriebswellen abhängig von einem durch den Verteilmotor ausgeübten Drehmoment ist.

Ein aktives Differential mit den Merkmalen des Oberbegriffs von Anspruch 1 ist aus US 2012/0083378 bekannt.

Aktive Differentiale werden benutzt um Antriebsmomente auf mehrere, insbesondere zwei, Abtriebswellen zu verteilen. Das Differential ermöglicht es dabei, dass die zwei Abtriebswellen verschiedene Drehgeschwindigkeiten aufweisen. Wird das Differential ohne einen zusätzlichen Verteilmotor oder ein vollständiges oder teilweises Sperren des Differentials betrieben, so werden auf beide Abtriebswellen die gleichen Drehmomente übertragen. Ein aktives Eingreifen in ein Differential, das in Abhängigkeit eines weiteren eingebrachten Drehmoments die Drehmomentverteilung auf die Abtriebswellen ändert, erlaubt eine flexible Verteilung von Drehmomenten.

Aktive Differentiale werden insbesondere in Kraftfahrzeugen zur Verteilung des Antriebsmoments eines Antriebsmotors auf die anzutreibenden Räder des Kraftfahrzeugs genutzt. Im Kraftfahrzeugsegment wird die Nutzung eines solchen aktiven Differentials häufig als "torque vectoring" oder "active yaw" bezeichnet. Die Nutzung eines aktiven Differentials im Kraftfahrzeug erlaubt insbesondere eine aktive Beeinflussung des Gierwinkels des Kraftfahrzeugs, da durch das aktive Differential die Drehmomente an den einzelnen Rädern und damit die am jeweiligen Rad auf die Straße übertragenden Kräfte separat gesteuert bzw. angepasst werden können.

Bei aktiven Differentialen führen selbst sehr kleine Drehzahlunterschiede zwischen den Abtriebswellen zu einer Rotation der Verteilwelle und damit des Verteilmotors. Da als Verteilmotor typischerweise ein relativ kleindimensionierter Motor genutzt werden soll, ist dabei typischerweise eine Übersetzung zwischen dem Drehzahlunterschied der Abtriebsachsen und der Verteilwelle vorgesehen, um mit dem relativ kleindimensionierten Verteilmotor große Drehmomentunterschiede zwischen den Abtriebsachsen generieren zu können. Daher können bereits geringe Drehzahlunterschiede zwischen Abtriebsachsen zu einer dauerhaften Rotation des Verteilmotors mit einer mittleren Drehzahl führen. Dies kann zu einem dauerhaften Laden und Entladen des Akkumulators mit geringen Strömen, zusätzlichen mechanischen Belastungen und insbesondere einer ungleichmäßigen Belastung von getakteter Leistungselektronik führen. Damit werden sowohl die elektrischen als auch die mechanischen Komponenten des aktiven Differentials bereits bei minimalen Drehzahlunterschieden belastet.

Insbesondere bei der Nutzung eines aktiven Differentials in einem Kraftfahrzeug können derartige Belastungen jedoch über lange Zeiträume auftreten, beispielsweise wenn die Reifen des Kraftfahrzeugs ungleichmäßig abgefahren sind und damit im Fahrbetrieb stets ein geringer Drehzahlunterschied zwischen den Abtriebsachsen, die mit den Reifen gekoppelt sind, besteht oder wenn die Gewichtsverlagerung im Kraftfahrzeug ungleichmäßig ist. Auch sehr kleine Lenkbewegungen, wie sie von Fahrern typischerweise ständig ausgeführt werden, führen zu einer dauerhaften Belastung des aktiven Differentials.

Der Erfindung liegt damit die Aufgabe zugrunde, ein aktives Differential anzugeben, dessen elektrische und mechanische Komponenten bei einer Geringbelastung durch kleine Drehzahlunterschiede zwischen den Abtriebsachsen weniger belastet werden.

Die Aufgabe wird erfindungsgemäß durch ein aktives Differential der eingangs genannten Art gelöst, wobei die Verteilwelle und das Planetengetriebe durch eine Kupplungseinrichtung gekoppelt sind, die ausschließlich bei Überschreiten eines vorgegebenen Grenzwertes durch die Drehzahldifferenz zwischen den Drehzahlen der Abtriebswellen sowie bei Erfüllung einer von einem Betriebszustand des Verteilmotors abhängigen Verbindungsbedingung ein Drehmoment von dem Planetengetriebe auf die Verteilwelle überträgt.

Der Erfindung liegt die Idee zugrunde, dass die einleitend beschriebenen Übertragung von geringen Drehzahlunterschieden zwischen den Abtriebswellen auf den Verteilmotor nachteilig ist und es daher vorteilhaft ist, Drehmomentübertragungen zumindest in Richtung des Verteilmotors drehzahlabhängig zu unterbinden. Dabei kann im einfachsten Fall die Kupplungseinrichtung die Verteilwelle vollständig vom Planetengetriebe entkoppeln, wenn die Drehzahldifferenz zwischen den Drehzahlen der Abtriebswellen unterhalb eines vorgegebenen Grenzwertes liegt. Dies ist insbesondere möglich, da die Rotation der Verteilwelle im gekoppelten Zustand mit einer Drehzahl erfolgt, die dem mit einem Übersetzungsfaktor skalierten Drehzahlunterschied zwischen den Abtriebsachsen entspricht. Die Drehzahl der Verteilwelle selbst im gekoppelten Zustand oder die Drehzahl einer Welle, die das Planetengetriebe mit der Kupplungseinrichtung koppelt, kann damit als Größe aufgefasst werden, die zum Drehzahlunterschied proportional ist. Daher kann eine Abhängigkeit vom Drehzahlunterschied auch als eine Abhängigkeit von dieser proportionalen Drehzahl betrachtet werden. Im einfachsten Fall kann die Kupplungseinrichtung durch eine Kupplung ausgebildet sein, die die zu kuppelnden Elemente erst bei einer vorgegebenen Mindestdrehzahl kuppelt, beispielsweise als eine entsprechend ausgebildete Fliehkraftkupplung. Selbstverständlich ist es auch möglich, die Drehzahldifferenz bzw. die zur Drehzahldifferenz proportionale Drehzahl durch einen Sensor zu messen, mithilfe einer Schaltung oder einer Steuereinrichtung mit einem Grenzwert zu vergleichen und eine steuerbare, insbesondere elektrisch ansteuerbare, Kupplungseinrichtung entsprechend zu steuern.

Dabei soll es möglich sein, auch in den Fällen das aktive Differential durch Aufbringen eines Drehmoments durch den Verteilmotor zu steuern, wenn der Drehzahlunterschied zwischen den Abtriebsachsen gering ist. So ist beispielsweise bei einer Nutzung des Differentials im Kraftfahrzeug möglich, dass bei einem Anfahren oder Halten am Berg oder beim Überfahren eines Hindernisses, wie eines Bordsteins oder Ähnlichem, gezielt auf eines der Räder ein höheres Drehmoment übertragen werden soll, um das Hindernis zu überwinden oder um einen nicht vollständig horizontalen Straßenverlauf auszugleichen, die Räder des Kraftfahrzeugs und damit die Abtriebsachsen jedoch mit identischer oder nahezu identischer Drehzahl drehen. Zur Steuerung des Differentials durch ein Drehmoment des Verteilmotors muss jedoch ein Drehmoment von der Verteilwelle auf das Planetengetriebe übertragen werden. Dabei wird jedoch auch ein Gegenmoment von dem Planetengetriebe auf die Verteilwelle übertragen. Daher ist es vorteilhaft, dass die Kopplungseinrichtung erfindungsgemäß bei Erfüllung der vom Betriebszustand des Verteilmotors abhängigen Verbindungsbedingung drehzahlunabhängig ein Drehmoment von dem Planetengetriebe auf die Verteilwelle überträgt. Die Verbindungsbedingung kann dabei insbesondere eine Bestromung des Verteilmotors und/oder eine Ansteuerung des Verteilmotors zur Generierung eines Drehmoments auswerten.

Handelt es sich um eine steuerbare Kupplungseinrichtung, die durch eine Steuereinrichtung gesteuert wird, ist dies einfach möglich. Die Steuereinrichtung kann die Kupplungseinrichtung grundsätzlich zur Kopplung des Planetengetriebes mit der Verteilerwelle ansteuern, wenn eine Situation vorliegt, in der ein Drehmoment gezielt übertragen werden soll. Grundsätzlich ist es jedoch auch möglich, die Kupplungseinrichtung mechanisch derart auszubilden, dass auch bei Unterschreiten einer Drehzahldifferenz bei Betrieb des Verteilmotors zur Erzeugung eines Drehmoments eine Drehmomentübertragung zwischen Verteilwelle und Planetengetriebe möglich ist.

Die Kupplungseinrichtung kann insbesondere eine Fliehkraftkupplung sein oder eine Fliehkraftkupplung umfassen. Eine Fliehkraftkupplung kann leicht so ausgebildet werden, dass eine Kopplung zwischen dem Planetengetriebe und der Verteilwelle genau dann erfolgt, wenn eine vorgegebene Drehzahl des Planetengetriebes bzw. einer Verbindungswelle zwischen Planetengetriebe und Kupplungseinrichtung überschritten wird. Da die Verbindungswelle eine Drehzahl aufinreist, die zur Drehzahldifferenz zwischen den Drehzahlen der Abtriebswellen proportional ist, kann eine Fliehkraftkupplung genutzt werden, um einen Planetengetriebe erst bei Überschreiten einer vorgegebenen Drehzahldifferenz mit einer Verteilwelle zu koppeln.

Alternativ kann die Kupplungseinrichtung eine viskose Kupplung sein oder eine viskose Kupplung umfassen. Die viskose Kupplung kann dabei einen definierten Momentschluss ab einer vorgegebenen Mindestdrehzahl aufweisen und bei kleinen Drehzahlen keine oder nur minimale Drehmomente übertragen. Damit gilt für die viskose Kupplung das oben zur Fliehkraftkupplung Gesagte.

Dabei ist es vorteilhaft, wenn die Kupplungseinrichtung eine Sperrvorrichtung umfasst, wobei die Kupplungseinrichtung zur drehzahlunabhängigen Übertragung von Drehmomenten von dem Planetengetriebe auf die Verteilwelle und von der Verteilwelle auf das Planetengetriebe bei aktiver Sperrvorrichtung ausgebildet ist. Dabei kann das Differential insbesondere eine Steuereinrichtung umfassen, die ausgebildet ist, bei Erfüllung der von einem Betriebszustand des Verteilmotors abhängigen Verbindungsbedingung die Sperreinrichtung zu aktiveren. Dabei kann der Betriebszustand, der zu einem Aktivieren der Sperreinrichtung führt, insbesondere eine Bestromung des Verteilmotors sein, wobei im Speziellen ein Stromgrenzwert vorgesehen ist, bei dessen Übertreten die Sperrvorrichtung aktiviert wird. Es ist jedoch auch möglich, dass für die Steuereinrichtung Informationen bereitgestellt werden, auf denen auch die Steuerung des Verteilmotors basiert. So ist es beispielsweise möglich, dass ein Fahrzeugsystem bei Ansteuerung des Verteilmotors zur Erzeugung eines definierten Drehmomentes den Drehmomentsollwert auch der Steuereinrichtung zur Verfügung stellt, so dass diese bei Ansteuerung des Verteilmotors zur Erzeugung des Drehmoments oder bei Überschreiten eines vorgegebenen Grenzwertes durch den Drehmomentsollwert die Sperrvorrichtung aktivieren kann.

Alternativ oder ergänzend ist auch möglich, dass die Sperrvorrichtung direkt in Abhängigkeit von elektrischen Signalen oder mechanischen Vorgängen aktiviert wird. So ist es beispielsweise möglich, mit der Bestromung des Motors auch einen Magneten zu bestromen, der die Sperrvorrichtung aktiviert, oder die Sperrvorrichtung in Abhängigkeit von in der Kupplungseinrichtung wirkenden Drehmomenten zu aktivieren.

Alternativ oder ergänzend zur Nutzung von Elementen der Kupplungseinrichtung, die rein mechanisch in Abhängigkeit der Drehzahldifferenz eine Kopplung von Planetengetriebe und Verteilwelle herbeiführen oder trennen, ist es möglich, insbesondere elektrisch gesteuerte Elemente der Kupplungseinrichtung zu nutzen. Dabei ist es vorteilhaft, wenn das Differential einen Sensor zur Erfassung der Drehzahldifferenz und eine Steuereinrichtung umfasst, wobei die Kupplungseinrichtung ein Kuppelelement umfasst, das in einem verbundenen Zustand ein Drehmoment von einem Planetengetriebe auf die Verteilwelle und von der Verteilwelle auf das Planetengetriebe überträgt und in einem getrennten Zustand kein Drehmoment überträgt, wobei die Steuereinrichtung ausgebildet ist, das Kuppelelement in Abhängigkeit der Drehzahldifferenz zum Wechsel zwischen dem verbundenen und dem getrennten Zustand anzusteuern.

Der Sensor kann dabei insbesondere an einer Welle angeordnet sein, deren Drehzahl proportional zur Drehzahldifferenz ist, insbesondere an der Verteilwelle oder einer Welle, die vom Planetengetriebe zur Kupplungseinrichtung führt. Die Nutzung eines Sensors und einer Steuereinrichtung hat dabei insbesondere den Vorteil, dass eine sehr flexible Steuerung des Kuppelelements möglich ist. Mit dieser flexiblen Steuerung kann vor allem leicht erreicht werden, dass auch bei niedrigen Drehzahldifferenzen eine Übertragung eines Drehmoments von der Verteilwelle auf das Planetengetriebe möglich ist. Zudem ist es bei Nutzung einer Steuereinrichtung einfach möglich, den vorgegebenen Grenzwert anzupassen. Im erfindungsgemäßen Differential soll die Drehmomentübertragung von dem Planetengetriebe auf die Verteilwelle insbesondere bei dauerhaften, aber geringen Drehzahldifferenzen zwischen den Drehzahlen der Antriebswellen unterbunden werden. Insbesondere bei der Nutzung in einem Kraftfahrzeug ist es jedoch vorteilhaft, diesen Grenzwert variabel zu gestalten, da beispielsweise die durch verschiedenes Abfahren der Reifen verursachten Drehzahldifferenzen sich über einen gewissen Zeitraum ändern können. Daher kann vorteilhaft bei Nutzung einer Steuereinrichtung zur Steuerung der Kupplungseinrichtung der vorgegebene Grenzwert in Abhängigkeit von Veränderungen der mittleren Drehzahldifferenzen über längere Zeiträume angepasst werden.

Dabei kann die Steuereinrichtung insbesondere ausgebildet sein, bei Vorliegen einer von einem Betriebszustand des Verteilmotors abhängigen Verbindungsbedingung, unabhängig von der Drehzahldifferenz, das Kuppelelement zum Wechsel in den und Verbleib in dem verbundenen Zustand anzusteuern. Die Verbindungsbedingung kann dabei insbesondere den Betriebszustand des Verteilmotors auswerten. Die Auswertung des Betriebszustands des Verteilmotors kann wie oben zur Aktivierung einer Sperrvorrichtung erläutert erfolgen.

Die Kuppelelemente können dabei auf vielfältige Weise ausgebildet sein. So kann das Kuppelelement eine Magnetkupplung sein, wobei wenigstens ein Magnet der Magnetkupplung durch die Steuereinrichtung zum Wechsel zwischen dem verbundenen und dem getrennten Zustand ansteuerbar ist. Magnetkupplungen sind ansteuerbar, indem die Position einer Scheibe oder die Anordnung von einem magnetischen Pulver oder einem Magnetofluid durch Schalten eines Magneten verändert wird, so dass, abhängig von der Schaltung des Elektromagneten, das Kuppelelement die Verteilwelle und das Planetengetriebe verbindet oder trennt. Durch Nutzung einer Magnetkupplung kann ein besonders einfach ausgebildetes elektrisch steuerbares Kuppelelement gebildet werden.

Alternativ kann das Kuppelelement wenigstens einen Kupplungsaktor umfassen, der durch die Steuereinrichtung zum Wechsel zwischen dem verbundenen und dem getrennten Zustand steuerbar ist, und der zur Bewegung wenigstens eines mechanischen Elements des Kuppelelements ausgebildet ist. Abhängig von den konkreten Anforderungen an die Kupplungseinrichtung im aktiven Differential kann eine derartige steuerbare mechanische Kupplung als Kuppelelement vorteilhaft sein. Dabei kann der Kupplungsaktor insbesondere die Lamellen einer Lamellenkupplung bewegen.

Wie eingangs erläutert kann eine Drehmomentübertragung ausschließlich in eine Richtung bei niedrigen Drehzahlen insbesondere dann erreicht werden, wenn die Kupplungseinrichtung einen Freilauf umfasst. Daher kann die Kupplungseinrichtung wenigstens einen die Verteilwelle und das Planetengetriebe koppelnden Freilauf und ein dem Freilauf zugeordnetes Sperrelement umfassen, wobei in einer Sperrstellung des Sperrelements der Freilauf gesperrt ist und in einer Offenstellung des Sperrelements in eine vorgegebene relative Drehrichtung eine freie Drehung der Verteilwelle gegenüber dem Planetengetriebe möglich ist, und wobei die Stellung des Sperrelements von der Drehzahldifferenz abhängig ist. Die Stellung des Sperrelements kann dabei insbesondere durch einen Aktor verändert werden, der durch eine Steuereinrichtung gesteuert wird. Alternativ kann das Sperrelement jedoch auch mechanisch so ausgebildet sein, dass es drehzahlabhängig zwischen einer Offenstellung des Sperrelements und einer Sperrstellung verbracht wird. Beispielsweise kann eine Fliehkraftkupplung oder eine viskose Kupplung, jeweils mit zusätzlicher Raste, genutzt werden, so dass z. B. bei einer Trennung der Fliehkraftkupplung ein Freilauf erreicht wird, und bei einer Verbindung der Fliehkraftkupplung eine Drehmomentübertragung in beide Richtungen möglich ist.

Da typischerweise eine Drehmomentübertragung vom Verteilmotor auf das Planetengetriebe in beide Richtungen möglich sein soll, können im Kupplungselement insbesondere zwei Freiläufe vorgesehen sein, die entgegengesetzte Sperrrichtungen aufweisen, wobei die Sperrelemente getrennt, insbesondere durch eine Steuereinrichtung, steuerbar sind. Alternativ können die Sperrelemente jedoch auch so ausgebildet und angeordnet sein, dass sie aufgrund der mechanischen Zusammenwirkungen in der Kupplungseinrichtung drehzahlabhängig und drehrichtungsabhängig zwischen der Sperrstellung und der Offenstellung verbracht werden.

Des Weiteren betrifft die Erfindung ein Kraftfahrzeug, das ein Differential gemäß einer der oben beschriebenen Ausführungsformen umfasst. Wie eingangs erläutert ist es insbesondere bei der Nutzung eines aktiven Differentials im Kraftfahrzeug möglich, dass geringe Drehzahlunterschiede zwischen den Rädern und damit zwischen den Abtriebsachsen dauerhaft auftreten und damit die mechanischen und elektrischen Komponenten des aktiven Differentials unnötig stark belastet werden. Daher ist es vorteilhaft ein erfindungsgemäßes Differential zu nutzen, bei dem ausschließlich bei Überschreiten eines vorgegebenen Grenzwerts durch die Drehzahldifferenz zwischen den Drehzahlen der Antriebswellen sowie bei Erfüllung einer von einem Betriebszustand des Verteilmotors abhängigen Verbindungsbedingung ein Drehmoment von dem Planetengetriebe auf die Verteilwelle übertragen wird.

Dabei können die Abtriebswellen insbesondere je mit einem Rad des Kraftfahrzeugs gekoppelt sein.

Weitere Vorteile und Einzelheiten der Erfindung ergeben sich aus den folgenden Ausführungsbeispielen sowie den zugehörigen Zeichnungen. Dabei zeigen:
- Fig. 1: schematisch ein Ausführungsbeispiel des erfindungsgemäßen aktiven Differentials,
- Fig. 2: schematisch ein weiteres Ausführungsbeispiel des erfindungsgemäßen aktiven Differentials,
- Fig. 3: die Kupplungseinrichtung eines dritten Ausführungsbeispiels des erfindungsgemäßen aktiven Differentials, und
- Fig. 4: ein Ausführungsbeispiel des erfindungsgemäßen Kraftfahrzeugs.

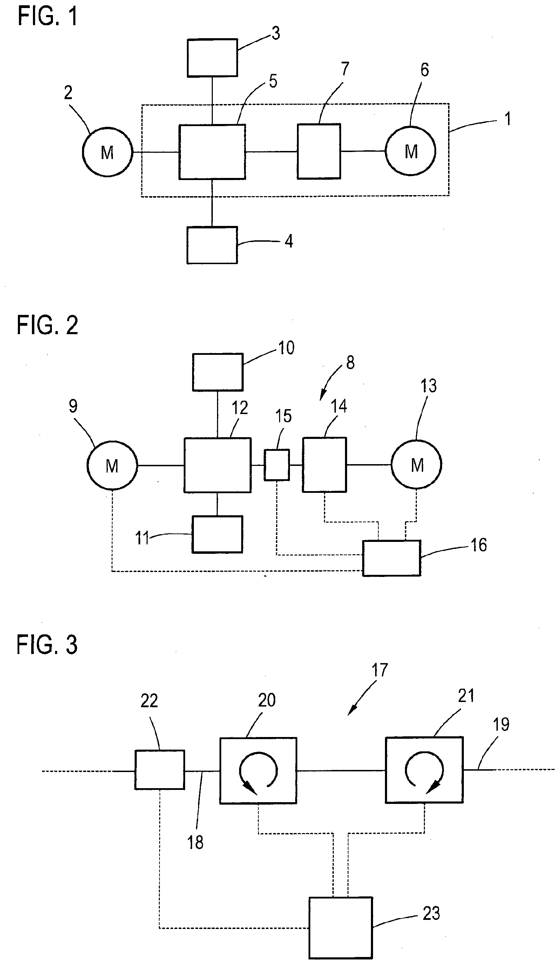

Fig. 1 zeigt ein Ausführungsbeispiel eines aktiven Differentials 1 zur gesteuerten Verteilung eines durch einen Antriebsmotor erzeugten Antriebsmoments auf zwei Abtriebswellen 3, 4. Die Kopplung des Antriebsmotors 2 und der Antriebswelle an die Abtriebswellen 3, 4 erfolgt durch das Planetengetriebe 5 des Differentials 1. Neben dem Planetengetriebe 5 umfasst das Differential 1 einen Verteilmotor 6, wobei die Verteilung des Antriebsmoments auf die Abtriebswellen 3, 4 abhängig von dem durch den Verteilmotor 6 ausgeübten Drehmoment ist. Der Verteilmotor 6 ist dabei über eine Verteilwelle mit der Kupplungseinrichtung 7 gekoppelt, die wiederum mit dem Planetengetriebe 5 gekoppelt ist. Bei einer vollständigen Entkopplung der Verteilwelle vom Planetengetriebe 5 durch die Kupplungseinrichtung 7 hat das Differential 1 das Verhalten eines nicht gesperrten Differentials, so dass das durch den Antriebsmotor 2 erzeugte Drehmoment gleichmäßig auf die Abtriebswellen 3 und 4 verteilt wird. Ist die vom Verteilmotor 6 kommende Verteilwelle durch die Kupplungseinrichtung 7 mit dem Planetengetriebe 5 verbunden, so steuert das Drehmoment des Verteilmotors 6 die Verteilung des Antriebsmoments auf die Abtriebswellen 3 und 4.

Bei großen Drehzahldifferenzen zwischen den Abtriebswellen 3 und 4 soll die Kupplungseinrichtung 7 die Verteilwelle mit dem Planetengetriebe 5 koppeln. Ist die Drehzahldifferenz zwischen den Drehzahlen der Abtriebswellen 3 und 4 jedoch klein, so soll die Kupplungseinrichtung 7 die Verteilwelle zumindest derart vom Planetengetriebe 5 entkoppeln, dass keine Drehmomente von dem Planetengetriebe 5 auf die Verteilwelle und damit auf den Verteilmotor 6 übertragen werden können. Um dies zu erreichen ist die Kupplungseinrichtung 7 derart ausgebildet, dass sie ausschließlich bei Überschreiten eines vorgegebenen Grenzwertes durch die Drehzahldifferenz zwischen den Drehzahlen der Abtriebswellen 3, 4 sowie bei Bestromung des Verteilmotors 6 ein Drehmoment von dem Planetengetriebe 5 auf die Verteilwelle überträgt. Dabei wird ausgenutzt, dass aufgrund der Kopplung der Abtriebswellen 3, 4 mit einer Verbindungswelle, die das Planetengetriebe 5 mit der Kupplungseinrichtung 7 verbindet, diese Verbindungswelle eine Drehzahl aufweist, die der mit einem Übersetzungsfaktor des Planetengetriebes 5 skalierten Drehzahldifferenz zwischen den Drehzahlen der Abtriebswellen 3 und 4 entspricht. Ein Grenzwert für die Drehzahldifferenz zwischen den Drehzahlen der Abtriebswellen 3, 4 entspricht damit einem abgeleiteten Grenzwert für die Drehzahl der Verbindungswelle.

Da die Verbindungswelle direkt mit der Kupplungseinrichtung 7 gekoppelt ist, kann als Kupplungseinrichtung 7 eine Kupplungseinrichtung genutzt werden, die eine drehzahlabhängige Kupplung der Verbindungswelle mit der Verteilwelle herbeiführt. Die gewünschte Funktion der Kupplungseinrichtung wird konkret dadurch erreicht, dass die Kupplungseinrichtung eine Fliehkraftkupplung ist. Die Fliehkraftkupplung ist dabei derart ausgebildet, dass bei geringen Drehzahlen die Verbindungswelle nicht mit der Verteilwelle gekoppelt ist, bei Erreichen einer gewissen Mindestdrehzahl jedoch eine Kopplung von Verbindungswelle und Verteilwelle und damit von Planetengetriebe 5 und Verteilmotor 6 erfolgt. Dabei ist an der Fliehkraftkupplung zusätzlich ein Magnet vorgesehen, der bei Bestromung des Verteilmotors 6 ebenfalls bestromt wird und bei Bestromung die Fliehkraftkupplung drehzahlunabhängig verbindet.

Eine vorteilhafte Weiterbildung des in Fig. 1 gezeigten aktiven Differentials 1 ist in Fig. 2 gezeigt. Das aktive Differential 8 ist dabei im Wesentlichen wie das in Fig. 1 gezeigte Differential 1 aufgebaut, wobei es sich von dem in Fig. 1 gezeigten Differential 1 durch die Ausbildung der Kupplungseinrichtung 14 sowie durch die zusätzliche Nutzung eines Sensors 15 und einer Steuereinrichtung 16 unterscheidet. Wie in dem in Fig. 1 gezeigten Differential 1 wird auch im Ausführungsbeispiel gemäß Fig. 2 durch das Planetengetriebe 12 des Differentials 8 ein Antriebsmoment des Antriebsmotors 9 auf die Abtriebswellen 10 und 11 verteilt. Dabei ist der Verteilmotor 13 über die Verteilwelle und die Kupplungseinrichtung 14 mit dem Planetengetriebe 12 gekoppelt. Zwischen Planetengetriebe 12 und Kupplungseinrichtung 14 ist zudem ein Sensor angeordnet, der die Drehzahl der Verbindungswelle zwischen Planetengetriebe 12 und Kupplungseinrichtung 14 erfasst. Die vom Sensor 15 erfassten Daten werden der Steuereinrichtung 16 zur Verfügung gestellt. Die Steuereinrichtung 16 steuert dabei abhängig von der durch Sensor 15 erfassten Drehzahl sowie weiteren im Kraftfahrzeug vorhandenen Daten den Antriebsmotor 9, den Verteilmotor 13 sowie die Kupplungseinrichtung 14.

Die Kupplungseinrichtung 14 ist hierbei als Magnetkupplung ausgebildet, die in Abhängigkeit eines Steuersignals der Steuereinrichtung 16 die Verteilwelle mit dem Planetengetriebe 12 verbindet oder nicht. Die Steuereinrichtung 16 erfasst zur Steuerung der Kupplungseinrichtung die vom Sensor 15 erfasste Drehzahl. Da die Steuereinrichtung 16 auch den Verteilmotor 13 ansteuert, liegen in der Steuereinrichtung 16 auch Informationen über die Solldrehmomente vor, die durch den Verteilmotor 13 ausgeübt werden sollen. Die Steuerung der Kupplungseinrichtung 14, also das Bestromen bzw. das Nichtbestromen des Elektromagneten der Magnetkupplung, erfolgt in Abhängigkeit sowohl des Solldrehmoments für den Verteilmotor 13 als auch der durch den Sensor 15 erfassten Drehzahl der Verteilwelle. Wird der Verteilmotor 13 angesteuert, um ein Solldrehmoment zu·erzeugen, wird die Kupplungseinrichtung 15 stets angesteuert, um die Verbindungswelle und die Verteilwelle zu verbinden. Erfolgt jedoch keine Ansteuerung des Verteilmotors 13 zur Erzeugung eines Drehmoments, so erfolgt die Ansteuerung der Kupplungseinrichtung 14 in Abhängigkeit der durch den Sensor 15 erfassten Drehzahl der Verteilwelle. Ist die erfasste Drehzahl niedriger oder gleich einem Grenzwert, so wird die Kupplungseinrichtung 14 angesteuert, um die Verteilwelle und die Verbindungswelle und damit das Planetengetriebe 12 und den Verteilmotor 13 zu trennen. Übersteigt die Drehzahl den Grenzwert, so wird die Kupplungseinrichtung 14 durch die Steuereinrichtung 16 angesteuert, um die Verbindungswelle und die Verteilwelle und damit das Planetengetriebe 12 und den Verteilmotor 13 zu verbinden. Damit ist es mit dem aktiven Differential 8 drehzahlunabhängig möglich, Drehmomente von der Verteilwelle und damit dem Verteilmotor 13 auf das Planetengetriebe 12 zu übertragen und damit aktiv auf die Verteilung des Drehmoments des Antriebsmotors 9 auf die Abtriebswellen 10, 11 einzuwirken. Zugleich wird jedoch eine Übertragung von Drehmomenten aufgrund von geringen Drehzahlunterschieden auf den Verteilmotor 13 unterbunden.

In einer alternativen, nicht getrennt gezeigten Ausführungsform eines aktiven Differentials ist es auch möglich, die Kupplungseinrichtung mechanisch so auszubilden, dass eine Drehmomentübertragung nur dann erfolgt, wenn die Verbindungswelle eine gewisse Mindestdrehzahl aufweist, also beispielsweise als Fliehkraftkupplung auszubilden, ergänzend jedoch an der Kupplungseinrichtung eine Sperrvorrichtung vorzusehen, die bei Aktivierung zu einer drehzahlunabhängigen Übertragung von Drehmomenten von der Verteilwelle auf das Planetengetriebe führt. Eine solche Sperrvorrichtung kann als Aktuator ausgeführt sein, der einen Sperrstift betätigt. In diesem Fall kann auf den zusätzlichen Sensor verzichtet werden, da die drehzahlabhängige Steuerung der Kupplungseinrichtung allein durch den mechanischen Aufbau der Kupplungseinrichtung erfolgt. Die Sperreinrichtung der Kupplungseinrichtung kann in diesem Fall durch die Steuereinrichtung genau dann aktiviert werden, wenn der Verteilmotor zur Erzeugung von Drehmomenten angesteuert wird. Damit wird die gleiche Funktion des aktiven Differentials erreicht wie die des zuvor mit Bezug auf Fig. 2 beschriebenen Differentials 8.

Fig. 3 zeigt eine weitere Ausgestaltungsmöglichkeit für eine Kupplungseinrichtung eines aktiven Differentials. Die Kupplungseinrichtung 17 koppelt die Verbindungswelle 18, die die Kupplungseinrichtung 17 und das nicht gezeigten Planetengetriebe verbindet, mit der Verteilwelle 19, die die Kupplungseinrichtung 17 mit dem nicht gezeigten Verteilmotor verbindet. Die Kupplungseinrichtung 17 umfasst dabei zwei Freiläufe 20, 21 die eine jeweils entgegengesetzte Freilaufrichtung aufweisen. Ohne weitere Elemente würde dies dazu führen, dass stets eine freie Rotation der Verbindungswelle 18 gegenüber der Verteilwelle 19 möglich ist. Daher umfassen die Freiläufe 20, 21 zusätzlich noch Sperrelemente, die in einer Sperrstellung die Freiläufe sperren und zu einer festen Kopplung der Wellen des Freilaufs in beide Richtungen führen. Die Sperrelemente sind jeweils separat durch die Steuereinrichtung 23 von einer Offenstellung, in der eine freie Drehung in die für den jeweiligen Freilauf 20, 21 vorgegebene Drehrichtung möglich ist, in ein Sperrstellung verbringbar, in der der Freilauf gesperrt ist. Wird durch den an der Verbindungswelle 18 angeordneten Drehzahlsensor 22 eine Drehzahl erfasst, die oberhalb eines vorgegebenen Grenzwertes liegen, so steuert die Steuereinrichtung 23 die Sperrelemente derart an, dass die Freiläufe 20 und 21 gesperrt sind, also eine Drehmomentübertragung in beide Richtungen möglich ist. Liegt die mit dem Sensor 22 erfasste Drehzahl jedoch unterhalb des Grenzwertes, und soll zudem ein Drehmoment vom nicht gezeigten Verteilmotor auf das nicht gezeigte Planetengetriebe übertragen werden, so wird durch Steuereinrichtung 23 das Sperrelement eines der Freiläufe 20, 21 derart angesteuert, dass es in die Offenstellung verbracht wird und das Sperrelement des anderen der Freiläufe 20, 21 derart, dass es in die Sperrstellung verbracht wird. Damit ist eine Drehmomentübertragung vom Verteilmotor auf das Planetengetriebe in eine vorgegebene Drehrichtung möglich, dennoch können auch bei Nutzung des Verteilmotors zur Verteilung des Drehmoments des Antriebsmotors auf die Abtriebsachsen geringe Drehzahlunterschiede zwischen den Abtriebsachsen zumindest in eine Drehrichtung gefiltert werden.

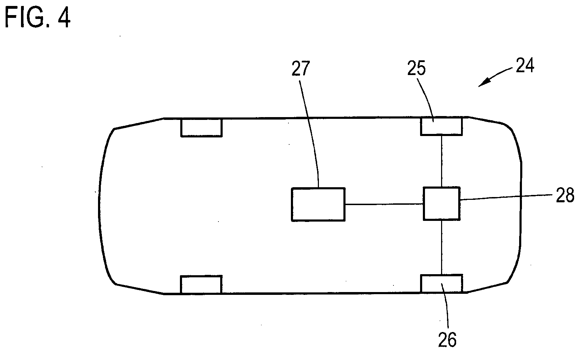

Fig. 4 zeigt ein Ausführungsbeispiel eines Kraftfahrzeugs, das ein aktives Differential umfasst. Das Kraftfahrzeug 24 weist einen Hinterradantrieb auf, wobei die Hinterräder 25, 26 durch den Antriebsmotor 27 betrieben werden. Die Verteilung des durch den Antriebsmotor 27 bereitgestellten Antriebsmoments auf die Räder 25, 26 erfolgt durch das aktive Differential 28. Das aktive Differential 28 ist entsprechend dem in Fig. 1 gezeigten Differential 1 aufgebaut. Alternativ wäre selbstverständlich auch ein Aufbau des Differentials 28 entsprechend dem in Fig. 2 gezeigten Differential 8 oder gemäß einer der anderen erläuternden Ausführungsformen möglich.

## Patentansprüche

1. Aktives Differential zur gesteuerten Verteilung eines durch einen Antriebsmotor (2, 9, 27) erzeugten Antriebsmoments auf zwei Abtriebswellen (3, 4, 10, 11), umfassend ein Planetengetriebe (5, 12) zur Kopplung der Abtriebswellen (3, 4, 10, 11) mit einer Antriebswelle des Antriebsmotors (2, 9, 27) und einer Verteilwelle (19) eines Verteilmotors (6, 13), wobei die Verteilung des Antriebsmoments auf die Abtriebswellen (3, 4, 10, 11) abhängig von einem durch den Verteilmotor (6, 13, 27) ausgeübten Drehmoment ist, und wobei die Verteilwelle (19) und das Planetengetriebe (5, 12) durch eine Kupplungseinrichtung (7, 14, 17) gekoppelt sind,
**dadurch gekennzeichnet,**
**dass** die Kupplungseinrichtung (7, 14, 17) ausschließlich bei Überschreiten eines vorgegebenen Grenzwertes durch die Drehzahldifferenz zwischen den Drehzahlen der Abtriebswellen (3, 4, 10, 11) sowie bei Erfüllung einer von einem Betriebszustand des Verteilmotors abhängigen Verbindungsbedingung ein Drehmoment von dem Planetengetriebe (5, 12) auf die Verteilwelle (19) überträgt.

2. Differential nach Anspruch 1,
**dadurch gekennzeichnet,**
**dass** die Kupplungseinrichtung (7, 14, 17) eine Fliehkraftkupplung ist oder eine Fliehkraftkupplung umfasst.

3. Differential nach Anspruch 1,
**dadurch gekennzeichnet,**
**dass** die Kupplungseinrichtung (7, 14, 17) eine viskose Kupplung ist oder eine viskose Kupplung umfasst.

4. Differential nach einem der vorangehenden Ansprüche,
**dadurch gekennzeichnet,**
**dass** die Kupplungseinrichtung (7, 14, 17) eine Sperrvorrichtung umfasst, wobei die Kupplungseinrichtung (7, 14, 17) zur drehzahlunabhängigen Übertragung von Drehmomenten von dem Planetengetriebe (5, 12) auf die Verteilwelle (19) und von der Verteilerwelle (19) auf das Planetengetriebe (5, 12) bei aktivierter Sperrvorrichtung ausgebildet ist.

5. Differential nach Anspruch 4,
**dadurch gekennzeichnet,**
**dass** das Differential (1, 8) eine Steuereinrichtung (4, 16, 23) umfasst, die ausgebildet ist, bei Erfüllung der von einem Betriebszustand des Verteilmotors (6, 13) abhängigen Verbindungsbedingung die Sperrvorrichtung zu aktivieren.

6. Differential nach Anspruch 1 ,
**dadurch gekennzeichnet,**
**dass** das Differential (1, 8) einen Sensor (15, 22) zur Erfassung der Drehzahldifferenz und eine Steuereinrichtung (4, 16, 23) umfasst, wobei die Kupplungseinrichtung (7, 14, 17) ein Kuppelelement umfasst, das in einem verbundenen Zustand ein Drehmoment von dem Planetengetriebe (5, 12) auf die Verteilwelle (19) und von der Verteilerwelle (19) auf das Planetengetriebe (5, 12) überträgt und in einem getrennten Zustand kein Drehmoment überträgt, wobei die Steuereinrichtung (4, 16, 23) ausgebildet ist, das Kuppelelement in Abhängigkeit der Drehzahldifferenz zum Wechsel zwischen dem verbundenen und dem getrennten Zustand anzusteuern.

7. Differential nach Anspruch 6,
**dadurch gekennzeichnet,**
**dass** die Steuereinrichtung (4, 16, 23) ausgebildet ist, bei Vorliegen einer von einem Betriebszustand des Verteilmotors (6, 13) abhängigen Verbindungsbedingung, unabhängig von der Drehzahldifferenz, das Kuppelelement zum Wechsel in den und Verbleib in dem verbundenen Zustand anzusteuern.

8. Differential nach Anspruch 6 oder 7,
**dadurch gekennzeichnet,**
**dass** das Kuppelelement eine Magnetkupplung ist, wobei wenigstens ein Magnet der Magnetkupplung durch die Steuereinrichtung (4, 16, 23) zum Wechsel zwischen dem verbundenen und dem getrennten Zustand ansteuerbar ist.

9. Differential nach Anspruch 6 oder 7,
**dadurch gekennzeichnet,**
**dass** das Kuppelelement wenigstens einen Kupplungsaktor umfasst, der durch die Steuereinrichtung (4, 16, 23) zum Wechsel zwischen dem verbundenen und dem getrennten Zustand steuerbar ist und der zur Bewegung wenigstens eines mechanischen Elements des Kuppelelements ausgebildet ist.

10. Differential nach Anspruch 1,
**dadurch gekennzeichnet,**
**dass** die Kupplungseinrichtung (7, 14, 17) wenigstens einen die Verteilwelle (19) und das Planetengetriebe (5, 12) koppelnden Freilauf (20, 21) und ein dem Freilauf (20, 21) zugeordnetes Sperrelement umfasst, wobei in einer Sperrstellung des Sperrelements der Freilauf (20, 21) gesperrt ist und in einer Offenstellung des Sperrelements in eine vorgegebene relative Drehrichtung eine freie Drehung der Verteilwelle (19) gegenüber dem Planetengetriebe (5, 12) möglich ist, und wobei die Stellung des Sperrelementes von der Drehzahldifferenz abhängig ist.

11. Kraftfahrzeug,
**dadurch gekennzeichnet,**
**dass** es ein Differential (1, 8, 28) nach einem der vorangehenden Ansprüche umfasst.

12. Kraftfahrzeug nach Anspruch 11,
**dadurch gekennzeichnet,**
**dass** die Abtriebswellen (2, 4, 10, 11) je mit einem Rad (25, 26) des Kraftfahrzeugs (24) gekoppelt sind.

## Claims

1. Active differential for distributing a drive torque, generated by a drive motor (2, 9, 27), to two output shafts (3, 4, 10, 11) in a controlled manner, comprising a planetary gear (5, 12) for coupling the output shafts (3, 4, 10, 11) to a drive shaft of the drive motor (2, 9, 27) and a distributor shaft (19) of a distributor motor (6, 13), wherein the distribution of the drive torque to the output shafts (3, 4, 10, 11) is dependent on a torque exerted by the distributor motor (6, 13, 27), and wherein the distributor shaft (19) and the planetary gear (5, 12) are coupled by a coupling device (7, 14, 17),
**characterised in that**
the coupling device (7, 14, 17) transmits a torque from the planetary gear (5, 12) to the distributor shaft (19) only when the speed difference between the speeds of the output shafts (3, 4, 10, 11) exceeds a predetermined limiting value and when a connection condition, which is dependent on an operating mode of the distributor motor, is satisfied.

2. Differential according to claim 1,
**characterised in that**
the coupling device (7, 14, 17) is a centrifugal clutch or it comprises a centrifugal clutch.

3. Differential according to claim 1,
**characterised in that**
the coupling device (7, 14,17) is a viscous clutch or it comprises a viscous clutch.

4. Differential according to any one of the preceding claims,
**characterised in that**
the coupling device (7, 14, 17) comprises a locking device, the coupling device (7, 14, 17) being configured to transmit torques, independently of speed, from the planetary gear (5, 12) to the distributor shaft (19) and from the distributor shaft (19) to the planetary gear (5, 12) when the locking device is activated.

5. Differential according to claim 4,
**characterised in that**
the differential (1, 8) comprises a control device (4, 16, 23) which is configured to activate the locking device when the connection condition, which is dependent on an operating mode of the distributor motor (6, 13), has been satisfied.

6. Differential according to claim 1,
**characterised in that**
the differential (1, 8) comprises a sensor (15, 22) for detecting the speed difference and a control device (4, 16, 23), wherein the coupling device (7, 14, 17) comprises a coupling element which, in a connected state, transmits a torque from the planetary gear (5, 12) to the distributor shaft (19) and from the distributor shaft (19) to the planetary gear (5, 12) and in a disconnected state, does not transmit a torque, wherein the control device (4, 16, 23) is configured to control the coupling element to change between the connected state and the disconnected state subject to the speed difference.

7. Differential according to claim 6,
**characterised in that**
the control device (4, 16, 23) is configured to control the coupling element for changing into, and remaining in the connected state, independently of the speed difference, when a connection condition which depends on an operating mode of the distributor motor (6, 13), is present.

8. Differential according to claim 6 or 7,
**characterised in that**
the coupling element is a magnetic coupling, at least one magnet of the magnetic coupling being controllable by the control device (4, 16, 23) to change between the connected state and the disconnected state.

9. Differential according to claim 6 or 7,
**characterised in that**
the coupling element comprises at least one coupling actuator which can be controlled by the control device (4, 16, 23) to change between the connected state and the disconnected state and which is configured to move at least one mechanical element of the coupling element.

10. Differential according to claim 1,
**characterised in that**
the coupling device (7, 14, 17) comprises at least one free-wheel (20, 21) which couples the distributor shaft (19) and the planetary gear (5, 12), and a locking element which is associated with the free-wheel (20, 21), wherein the free-wheel (20, 21) is locked in a locking position of the locking element, and a free rotation of the distributor shaft (19) relative to the planetary gear (5, 12) in a predetermined relative rotational direction is possible in an open position of the locking element, and wherein the position of the locking element is dependent on the speed difference.

11. Motor vehicle,
**characterised in that**
it comprises a differential (1, 8, 28) according to any one of the preceding claims.

12. Motor vehicle according to claim 11,
**characterised in that**
each of the output shafts (2, 4, 10, 11) is coupled to a wheel (25, 26) of the motor vehicle (24).

## Revendications

1. Différentiel actif pour la distribution commandée d'un couple d'entraînement généré par un moteur d'entraînement (2, 9, 27) sur deux arbres de sortie (3, 4, 10, 11), comprenant un engrenage planétaire (5, 12) pour le couplage des arbres de sortie (3, 4, 10, 11) avec un arbre d'entraînement du moteur d'entraînement (2, 9, 27) et un arbre de distribution (19) d'un moteur de distribution (6, 13), dans lequel la distribution du couple d'entraînement sur les arbres de sortie (3, 4, 10, 11) dépend d'un couple exercé par le moteur de distribution (6, 13, 27),
et dans lequel l'arbre de distribution (19) et l'engrenage planétaire (5, 12) sont couplés par un dispositif d'embrayage (7, 14, 17),
**caractérisé en ce**
**que** le dispositif d'embrayage (7, 14, 17) transmet, exclusivement en cas de dépassement d'une valeur limite prédéfinie par la différence de vitesse de rotation entre les vitesses de rotation des arbres de sortie (3, 4, 10, 11) ainsi qu'en cas de remplissage d'une condition de liaison dépendant d'un état de fonctionnement du moteur de distribution, un couple de l'engrenage planétaire (5, 12) à l'arbre de distribution (19).

2. Différentiel selon la revendication 1,
**caractérisé en ce**
**que** le dispositif d'embrayage (7, 14, 17) est un embrayage à force centrifuge ou comprend un embrayage à force centrifuge.

3. Différentiel selon la revendication 1,
**caractérisé en ce**
**que** le dispositif d'embrayage (7, 14, 17) est un embrayage visqueux ou comprend un embrayage visqueux.

4. Différentiel selon l'une quelconque des revendications précédentes,
**caractérisé en ce**
**que** le dispositif d'embrayage (7, 14, 17) comprend un dispositif de blocage, dans lequel le dispositif d'embrayage (7, 14, 17) est réalisé pour la transmission indépendante de la vitesse de rotation de couples de l'engrenage planétaire (5, 12) à l'arbre de distribution (19) et de l'arbre de distribution (19) à l'engrenage planétaire (5, 12) en cas de dispositif de blocage activé.

5. Différentiel selon la revendication 4,
**caractérisé en ce**
**que** le différentiel (1, 8) comprend un dispositif de commande (4, 16, 23) qui est réalisé pour activer le dispositif de blocage lors du remplissage de la condition de liaison dépendant d'un état de fonctionnement du moteur de distribution (6,13).

6. Différentiel selon la revendication 1
**caractérisé en ce**
**que** le différentiel (1, 8) comprend un capteur (15, 22) pour la détection de la différence de vitesse de rotation et un dispositif de commande (4, 16, 23), dans lequel le dispositif d'embrayage (7, 14, 17) comprend un élément de liaison qui transmet dans un état relié un couple de l'engrenage planétaire (5, 12) à l'arbre de distribution (19) et de l'arbre de distribution (19) à l'engrenage planétaire (5, 12) et ne transmet aucun couple dans un état séparé, dans lequel le dispositif de commande (4, 16, 23) est réalisé pour commander l'élément de liaison en fonction de la différence de vitesse de rotation pour le changement entre l'état relié et l'état séparé.

7. Différentiel selon la revendication 6,
**caractérisé en ce**
**que** le dispositif de commande (4, 16, 23) est réalisé pour commander en présence d'une condition de liaison dépendant d'un état de fonctionnement du moteur de distribution (6, 13), indépendamment de la différence de vitesse de rotation, l'élément de liaison pour le changement dans l'état relié et le maintien dans celui-ci.

8. Différentiel selon la revendication 6 ou 7,
**caractérisé en ce**
**que** l'élément de liaison est un embrayage magnétique, dans lequel au moins un aimant de l'embrayage magnétique peut être commandé par le dispositif de commande (4, 16, 23) pour le changement entre l'état relié et l'état séparé.

9. Différentiel selon la revendication 6 ou 7,
**caractérisé en ce**
**que** l'élément de liaison comprend au moins un actionneur d'embrayage qui peut être commandé par le dispositif de commande (4, 16, 23) pour le changement entre l'état relié et l'état séparé et qui est réalisé pour le mouvement d'au moins un élément mécanique de l'élément de liaison.

10. Différentiel selon la revendication 1,
**caractérisé en ce**
**que** le dispositif d'embrayage (7, 14, 17) comprend au moins une roue libre (20, 21) couplant l'arbre de distribution (19) et l'engrenage planétaire (5, 12) et un élément de blocage associé à la roue libre (20, 21), dans lequel dans une position de blocage de l'élément de blocage, la roue libre (20, 21) est bloquée et dans une position ouverte de l'élément de blocage dans un sens de rotation relatif prédéfini, une rotation libre de l'arbre de distribution (19) par rapport à l'engrenage planétaire (5, 12) est possible, et dans lequel la position de l'élément de blocage dépend de la différence de vitesse de rotation.

11. Véhicule automobile,
**caractérisé en ce**
**qu'**il comprend un différentiel (1, 8, 28) selon l'une quelconque des revendications précédentes.

12. Véhicule automobile selon la revendication 11,
**caractérisé en ce**
**que** les arbres de sortie (2, 4, 10, 11) sont couplés chacun à une roue (25, 26) du véhicule automobile (24).
